# EUROPÄISCHE PATENTSCHRIFT

(11) **EP 0 621 504 B1**
(45) Veröffentlichungstag und Bekanntmachung des Hinweises auf die Patenterteilung: **12.03.1997**
(21) Anmeldenummer: 94105747.3
(22) Anmeldetag: 14.04.1994
(51) Int. Cl.: G02F 1/313, G02B 6/12

(54) **Optischer Hybrid-Schalter**
Optical hybrid switch
Commutateur optique hybride

(30) Priorität: 17.04.1993 DE 4312568
(43) Veröffentlichungstag der Anmeldung: 26.10.1994
(73) Patentinhaber: Alcatel SEL Aktiengesellschaft, D-70435 Stuttgart (DE); ALCATEL N.V., NL-1077 XX Amsterdam (NL)
(72) Erfinder: Kersten, Peter, Dr., D-71229 Leonberg (DE); Matthies, Klaus-D., D-71696 Möglingen (DE)
(74) Vertreter: Pechhold, Eberhard, Dipl.-Phys.

(56) Entgegenhaltungen:
- PATENT ABSTRACTS OF JAPAN vol. 015, no. 214 (P-1209) 31. Mai 1991 & JP-A-03 059 546 (FUJITSU LTD) 14. März 1991
- JAPANESE JOURNAL OF APPLIED PHYSICS, LETTERS., Bd.31, Nr.8B, August 1992, TOKYO JP Seiten L1180 - L1181, XP000355428 Sotoyama W et al 'Directional-coupled optical switch between stacked waveguide layers using electro-optic polymer'
- APPLIED PHYSICS LETTERS., Bd.63, Nr.9, August 1993, NEW YORK US Seiten 1161 - 1163, XP000394498 Hikita M et al 'Optical intensity modulation in a vertically stacked coupler incorporating electro-optic polymer'
- PATENT ABSTRACTS OF JAPAN vol. 017, no. 669 (P-1657) 9. Dezember 1993 & JP-A-05 224 245 (NEC CORP) 3. September 1993

## Beschreibung

Die Erfindung betrifft einen optischen Hybrid-Schalter nach dem Oberbegriff des Patentanspruchs 1.

Ein derartiger Schalter ist z.B. aus der Fachzeitschrift "Electronics Letters", Vol 26, No 1, Seiten 4 und 5, (Veröffentlichungsdatum 04.01.1990) bekannt.

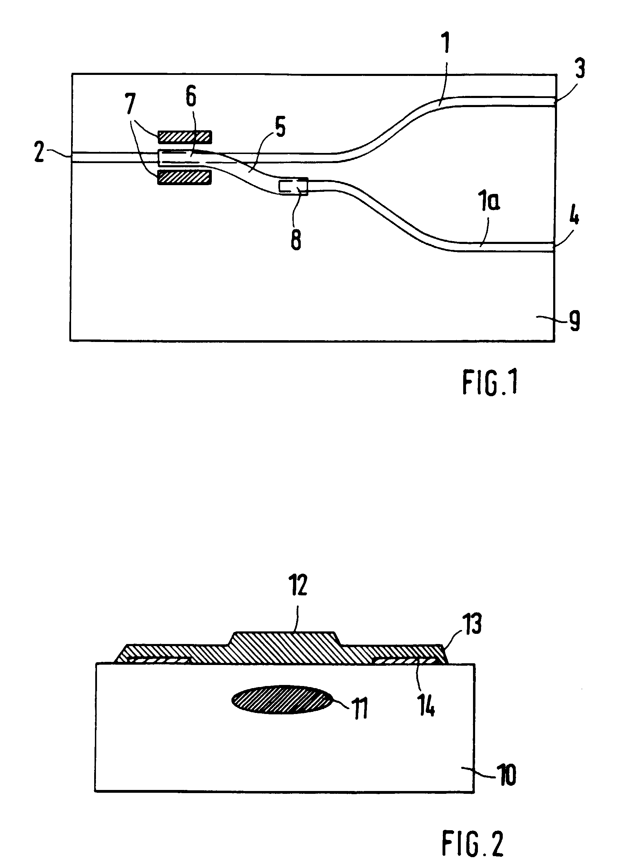

Grundelement für eine dort in Fig. 3 wiedergegebene Schaltmatrix ist ein Schalter aus Ti: Li Nb O₃ gemäß Fig. 1. Ein derartiger Schalter besteht aus einem gegabelten optischen Wellenleiter, dessen Gabeläste von seitlich und in der Mitte angeordneten Elektroden, von denen die mittlere einen den engeren Gabelbereich überlappenden Fortsatz besitzt, flankiert werden. Wegen der nichtlinearen optischen Eigenschaften des Ti: Li Nb O₃, z.B. einer Abhängigkeit des Brechungsindex von der Stärke eines angelegten elektrischen Feldes, läßt sich Licht, das dem Schalter von der unverzweigten Seite her zugeführt wird, durch Anlegen vorgegebener Spannungen an die Elektroden entweder ausschließlich in den einen oder in den anderen Gabelast lenken oder in vorgegebenem Verhältnis auf beide Gabeläste verteilen.

Die Aufteilung des Lichtes erfolgt dabei nach dem Prinzip des optischen Richtkopplers, das z.B. in "Applied Physics Letters", Vol 27, No 5, 1. Sept. 1975, S. 289 ff. näher beschrieben ist.

Die den optischen Schalter bildende, aus optisch nichtlinearem Werkstoff bestehende Wellenleiterstruktur muß in oder auf einem mechanisch stabilen Träger, z.B. einem Substrat erzeugt werden, das nicht in beliebiger Größe hergestellt werden kann. Der bekannte Schalter muß deshalb über weitere, in Fig. 1 nicht dargestellte, vorzugsweise fest eingestellte Koppler mit passiven Wellenleitern gekoppelt werden, die der Zuführung und der Weiterleitung des zu verteilenden Lichtstromes dienen. Sieht man von Ausführungen ab, bei denen mehrere Schalter auf einem einzigen Substrat integriert sind, so weist jeder Schalter vier Koppler auf, von denen drei dem Anschluß an passive optische Wellenleiter dienen.

Soll anstelle von Ti: Li Nb O₃ ein leichter handhabbarer optisch nichtlinearer Werkstoff verwendet werden, so bietet sich hierfür ein NLO-Polymer an. Dieses besitzt jedoch eine höhere Dämpfung als Li Nb O₃, so daß die in den Kopplern und in den aus NLO-Polymer bestehenden Wellenleiterstrecken entstehenden Verluste die Gesamtdämpfung des optischen Schalters maßgeblich bestimmen.

Es ist deshalb Aufgabe der Erfindung, einen optischen Schalter der eingangs genannten Art zu schaffen, der zu seinem Betrieb eine möglichst geringe Zahl von Kopplern benötigt und dessen aus optisch nichtlinearem Werkstoff bestehende Wellenleiterstrecken auf ein Minimum an Gesamtlänge reduziert sind.

Diese Aufgabe wird durch die im Patentanspruch 1 angegebenen Merkmale gelöst.

Infolge der Ausbildung eines hybriden steuerbaren Kopplers kann hier der auf der unverzweigten Seite des optischen Schalters ankommende passive Lichtwellenleiter ohne Unterbrechung als einer der abgehenden passiven Lichtwellenleiter weitergeführt werden, was die Einsparung von zwei der drei fest eingestellten Koppler ermöglicht. Zusätzlich wird die außerhalb der Koppler benötigte, aus nichtlinearem optischem Werkstoff bestehende Wellenleiterstruktur auf die sehr kurz auslegbare Strecke zwischen steuerbarem Koppler und dem zur Ankopplung an den noch freien passiven Lichtwellenleiter notwendigen Koppler beschränkt, was den Einsatz preiswerter und leicht handhabbarer, wenngleich höher dämpfender optisch nichtlinearer Materialien, wie z.B. NLO-Polymer gestattet.

Weiterbildungen der Erfindung sind in den Unteransprüchen angegeben:

So betrifft Patentanspruch 2 die Verwendung von NLO-Polymer innerhalb der elektrooptisch aktiven Wellenleiterstruktur. NLO-Polymere und deren Verwendung sind hierbei z.B. aus dem Fachbuch "Polymers for Lightwave and Integrated Optics" von L.A. Hornak, DEKKAER, New York, 1992 bekannt.

Patentanspruch 3 betrifft eine technisch einfach zu realisierende Variante, bei der die passiven Wellenleiter im Substrat eingebettet sind und eine als Rippenwellenleiter auf das Substrat aufgebrachte elektrooptisch aktive Struktur mit den eingebetteten passiven Wellenleitern vertikale Koppler bildet.

Eine andere Variante mit parallelen Kopplern ist Gegenstand des Patentanspruchs 4.

Patentanspruch 5 schließlich betrifft die Verwendung des optischen Hybridschalters in einer kaskadierten optischen Schaltmatrix.

Anhand zweier Figuren soll nun ein optischer Hybridschalter nach der Erfindung ausführlich beschrieben werden:
- Fig. 1: zeigt schematisch den optischen Hybrid-Schalter in Draufsicht
- Fig. 2: zeigt einen steuerbaren vertikalen Koppler.

In Fig. 1 sind, in einem Substrat 9 eingebettet, passive Wellenleiter 1, 1a zu erkennen. Diese bilden einen optischen Eingang 2 und optische Ausgänge 3 und 4. Einer der passiven Wellenleiter (1) verläuft ohne eine Unterbrechung vom optischen Eingang 2 zum optischen Ausgang 3, der andere (1a) beginnt an einem fest eingestellten Koppler 8 und endet am optischen Ausgang 4. Der fest eingestellte Koppler 8 bildet das Ende einer optisch nicht linearen Wellenleiterstruktur 5, die z.B. aus NLO-Polymer besteht und mit dem vom optischen Eingang her kommenden passiven Wellenleiter über einen steuerbaren Koppler 6 gekoppelt ist. Der steuerbare Koppler wird über seitlich angebrachte Elektroden 7 mit Spannung beaufschlagt und koppelt einen von der Länge des Kopplers 6 und der angelegten Spannung abhängigen Teil der vom optischen Eingang her eingestrahlten optischen Energie aus dem passiven Wellenleiter 1 in die optisch aktive Wellenleiterstruktur 5 über.

Im Schaltbetrieb wird annähernd die gesamte über den Eingang 2 zugeführte optische Energie entweder dem Ausgang 3 oder dem Ausgang 4 zugeführt. Während auf dem Weg zu Ausgang 3 nur die geringe Dämpfung des passiven optischen Wellenleiters auftritt, wird das zum Ausgang 4 übergekoppelte Licht in den Kopplern 6 und 8 und der Wellenleiterstruktur 5 gedämpft. Bei extrem kurzer Ausführung der Wellenleiterstruktur ergibt sich gegenüber bekannten auf NLO-Basis arbeitenden optischen Schaltern dennoch eine Verringerung der Dämpfung um 50 bis 70%. Hierbei wird von Kopplerlängen von etwa 5 mm und einer Länge von 1 mm für die dazwischenliegende Wellenleiterstruktur ausgegangen.

In Fig. 2 ist in einem Substrat 10, z.B. einem Glassubstrat mit niedrigem Brechungsindex ein passiver optischer Wellenleiter 11, der z.B. aus Glas mit höherem Brechungsindex bestehen kann, eingebettet. Auf dem Substrat 10 befindet sich eine Rippenwellenleiterstruktur 12 aus einem nichtlinearen optischen Material, z.B. einem NLO-Polymer. Elektroden 14 zur Erzeugung eines elektrischen Feldes im Bereich des nichtlinearen optischen Materials befinden sich zu beiden Seiten des Rippenwellenleiters. Sie liegen dem Substrat 10 unmittelbar auf und sind von Seitenbereichen 13 des Rippenwellenleiters überdeckt. Die Elektroden 14 werden auch zur Polung des NLO-Polymers im zentralen Rippenwellenleiterbereich verwendet.

## Patentansprüche

1. Optischer Hybrid-Schalter zur spannungsgesteuerten Überleitung von über einen ankommenden passiven optischen Wellenleiter zugeführtem Licht des sichtbaren oder nicht sichtbaren Spektrums auf mindestens einen von zwei abgehenden passiven Wellenleitern, mit einer auf ein Substrat aufgebrachten, mit den passiven Wellenleitern gekoppelten, elektrooptisch aktiven Wellenleiterstruktur, welche mindestens einen durch Anlegen einer elektrischen Spannung einstellbaren, als Lichtweiche fungierenden Koppler aufweist,
**dadurch gekennzeichnet**, daß der ankommende passive optische Wellenleiter (1) ohne Unterbrechung als einer der abgehenden Wellenleiter weitergeführt ist, daß die elektrooptisch aktive Wellenleiterstruktur (5) einerseits mit dem durchgehenden passiven optischen Wellenleiter (1) einen als Lichtweiche fungierenden, durch Anlegen einer elektrischen Spannung einstellbaren Koppler (6), andererseits mit dem anderen abgehenden Wellenleiter (1a) einen fest eingestellten Koppler (8) bildet.

2. Optischer Hybrid-Schalter nach Anspruch 1,
dadurch gekennzeichnet, daß die elektrooptisch aktive Struktur (5) aus NLO-Polymer besteht.

3. Optischer Hybrid-Schalter nach Anspruch 1 oder Anspruch 2,
dadurch gekennzeichnet, daß die passiven Wellenleiter (1, 1a) in das Substrat (9, 10) eingebettet sind und die elektrooptisch aktive Struktur (5) als Rippenwellenleiter (12) auf das Substrat (9, 10) aufgebracht und darauf so angeordnet ist, daß sie in Bereichen, in denen Koppler (6, 8) entstehen sollen, oberhalb der passiven Lichtwellenleiter (1, 1a) verläuft und in Bereichen, in denen einstellbare Koppler (6) entstehen sollen, zusätzlich von koplanar angeordneten Elektroden (14) flankiert wird.

4. Optischer Hybrid-Schalter nach Anspruch 1 oder Anspruch 2,
dadurch gekennzeichnet, daß die passiven Lichtwellenleiter mit der elektrooptisch aktiven Struktur in einer Ebene liegend im Substrat eingebettet sind und daß Elektroden oberhalb und unterhalb der optisch aktiven Struktur angebracht sind.

5. Optischer Hybrid-Schalter nach einem der vorstehenden Ansprüche,
dadurch gekennzeichnet, daß er innerhalb einer kaskadenartig miteinander verschalteten Vielzahl weiterer gleichartiger optischer Hybrid-Schalter verwendet wird.

## Claims

1. Optical hybrid switch for the voltage-controlled transfer of light of the visible or nonvisible spectrum supplied via an incoming passive optical waveguide to at least one of two outgoing passive waveguides, comprising an electrooptically active waveguide structure deposited on a substrate and coupled to the passive waveguides and which has at least one coupler which can be adjusted by applying an electrical voltage and acts as an optical splitter,
characterized in that the incoming passive optical waveguide (1) is continued without interruption as one of the outgoing waveguides, in that the electrooptically active waveguide structure (5) forms, on the one hand, with the continuous passive optical waveguide (1), a coupler (6) which functions as optical splitter and can be adjusted by applying an electrical voltage and, on the other hand, with the other outgoing waveguide (1a), a permanently adjusted coupler (8).

2. Optical hybrid switch according to Claim 1,
characterized in that the electrooptically active structure (5) is composed of NLO polymer.

3. Optical hybrid switch according to Claim 1 or Claim 2,
characterized in that the passive waveguides (1, 1a) are embedded in the substrate (9, 10) and the electrooptically active structure (5) is deposited on the substrate (9, 10) as ribbed waveguide (12) and is so disposed thereon that, in the areas in which couplers (6, 8) are to be formed, it extends above the passive optical waveguides (1, 1a) and in areas in which adjustable couplers (6) are to be formed, it is additionally flanked by coplanarly disposed electrodes (14).

4. Optical hybrid switch according to Claim 1 or Claim 2,
characterized in that the passive optical waveguides are embedded in the substrate with the electrooptically active structure so as to lie in one plane and in that electrodes are deposited above and below the optically active structure.

5. Optical hybrid switch according to one of the preceding claims, characterized in that it is used within a multiplicity of further similar optical hybrid switches which are connected together in a cascade-like manner.

## Revendications

1. Commutateur hybride optique pour la transmission par commande de tension de lumière du spectre visible ou invisible, provenant d'un guide d'ondes optique passif, sur un au moins de deux guides d'ondes passifs de départ, avec une structure de guide d'ondes active électrooptique placée sur un substrat et couplée avec les guides d'ondes passifs, laquelle structure présente au moins un coupleur programmable par application d'une tension électrique et faisant fonction de filtre de bandes lumineuses,
caractérisé par le fait que le guide d'ondes optique passif (1) arrivant est transmis sans interruption comme un des guides d'ondes sortants, que la structure électrooptique active de guide d'ondes (5) forme d'une part par application d'une tension électrique un coupleur programmable (6) faisant fonction de filtre de bandes lumineuses, et d'autre part, avec l'autre guide d'onde (la) partant, un coupleur fixe (8).

2. Commutateur hybride optique conformément à la spécification 1, caractérisé par le fait que la structure électrooptique active (5) est en polymère NLO.

3. Commutateur hybride optique conformément à la spécification 1 ou la spécification 2, caractérisé par le fait que les guides d'ondes passifs (1, la) sont logés dans le substrat (9, 10) et la structure électrooptique active (5) est placée comme guide d'ondes nervurées (12) sur le substrat (9, 10) et y est agencée de telle sorte qu'elle se déplace au-dessus des guides d'ondes lumineuses passifs (1, la) dans les domaines où des coupleurs (6, 8) doivent être créés et, dans les domaines dans lesquels des coupleurs réglables (6) doivent être créés, est également flanquée par des électrodes coplanaires (14).

4. Commutateur hybride optique conformément à la spécification 1 ou la spécification 2, caractérisé par le fait que les guides passifs d'ondes lumineuses sont logés dans le substrat dans un plan avec la structure électrooptique active, et que les électrodes sont installées au-dessus et au-dessous de la structure optique active:

5. Commutateur hybride optique conformément à une des spécifications précédentes, caractérisé par le fait qu'il est utilisé au sein d'un grand nombre de commutateurs hybrides optiques similaires en cascade.
